# FASCICULE DE BREVET EUROPEEN

(11) **EP 3 758 969 B1**
(45) Date de publication et mention de la délivrance du brevet: **03.04.2024**
(21) Numéro de dépôt: 19711997.7
(22) Date de dépôt: 26.02.2019
(51) Int. Cl.: B60L 3/00, B60L 15/00, B60L 15/06, H02J 3/32, B60L 53/24, B60L 53/22, B60L 58/21, B60L 58/22, B60L 58/20, B60L 50/64

(54) **MODULE D'ALIMENTATION POUR MOTEUR DE VÉHICULE ÉLECTRIQUE**
VERSORGUNGSMODUL FÜR EINEN ELEKTROFAHRZEUGMOTOR
SUPPLY MODULE FOR ELECTRIC VEHICLE MOTOR

(30) Priorité: 27.02.2018 FR 1851746
(43) Date de publication de la demande: 06.01.2021
(73) Titulaire: Commissariat à l'Energie Atomique et aux Energies Alternatives, 75015 Paris (FR)
(72) Inventeur: CHATROUX, Daniel, 38054 GRENOBLE cedex 9 (FR); GARNIER, Laurent, 38054 GRENOBLE cedex 9 (FR)
(74) Mandataire: INNOV-GROUP
(86) Numéro de dépôt international: PCT/FR2019/050436
(87) Numéro de publication internationale: WO 2019/166733

(56) Documents cités:
- EP-A1- 1 713 155
- WO-A1-2008/142018
- WO-A1-2017/183429
- WO-A2-2009/125012
- CN-U- 204 167 912
- DE-A1-102005 019 215
- DE-A1-102012 206 152
- DE-A1-102014 114 792
- JP-A- 2012 200 098
- Singer Arthur: "Evaluierung einer neuartigen Umrichtertopologie zur Kombination von Batterie, Balancing-Systemen, Umrichtern und Ladeschaltungen", , 22 December 2015 (2015-12-22), pages 1-42, XP093076364, Retrieved from the Internet: URL:https://www.dbu.de/OPAC/ab/DBU-Abschlu ssbericht-AZ-31873.pdf [retrieved on 2023-08-25]

## Description

L'invention concerne l'alimentation des véhicules électriques. Elle vise plus particulièrement les systèmes permettant d'accumuler de l'énergie dans ces véhicules puis ensuite de la restituer pour, notamment, la propulsion du véhicule.

Les véhicules électriques comportent généralement un accumulateur électrique sous forme, par exemple, d'un pack de batteries. Cet accumulateur électrique peut être rechargé par une source d'énergie électrique externe au véhicule. Avec un accumulateur électrique suffisamment chargé, le véhicule électrique peut alimenter ses moyens de propulsion, comportant généralement un ou plusieurs moteurs électriques.

Le véhicule électrique subit des phases de charge de l'accumulateur électrique et des phases de propulsion, où l'accumulateur alimente les moyens de propulsion du véhicule.

Pour alimenter ses moyens de propulsion ainsi que pour charger l'accumulateur électrique, le véhicule électrique comporte généralement un chargeur qui est un convertisseur d'une tension alternative vers une tension continue et qui permet la charge de l'accumulateur à partir d'un réseau électrique, pendant les phases de charge, et d'un onduleur qui est un convertisseur d'une tension continue vers une tension alternative qui permet l'alimentation des moyens de propulsion à partir de l'accumulateur, pendant les phases de propulsion. Pour certains véhicules, certaines parties de ces convertisseurs sont mutualisées pour gagner en volume, masse et coût.

La demande de brevet FR2738411 décrit un système d'alimentation électrique, pour véhicule électrique, qui comporte un onduleur alimentant le moteur électrique du véhicule à partir d'une batterie. Lorsque l'onduleur n'est pas en service, des moyens interrupteurs présents dans l'onduleur sont utilisés pour former un convertisseur de type alternatif-continu recevant en entrée une tension alternative monophasée et délivrant une tension continue de charge de la batterie, ce qui permet de charger la batterie à partir de la tension alternative monophasée.

La demande de brevet EP0553824 décrit un système électrique pour un véhicule électrique qui comporte un onduleur permettant la commande du moteur électrique du véhicule à partir d'une batterie, et permettant également la charge de la batterie à partir d'une tension alternative fournie du côté de l'étage alternatif de l'onduleur. Ce document décrit aussi l'utilisation des enroulements du moteur électrique du véhicule comme inductances utilisées dans la charge de la batterie par l'onduleur.

La demande de brevet FR2946473 décrit un ensemble électromoteur, notamment pour véhicule automobile à propulsion électrique, comprenant un moteur électrique multiphasé, une batterie d'accumulateurs, un onduleur apte à convertir le courant continu de la batterie en courant alternatif multiphasé adapté pour alimenter le moteur, et un boitier de connexion qui permet alternativement d'alimenter le moteur à partir de la batterie, de charger la batterie directement à partir d'un réseau monophasé, et de charger la batterie à partir d'un réseau multiphasé.

Le document JP2012200098A décrit un module d'alimentation pour moteur de véhicule électrique. L'invention a pour but d'améliorer l'alimentation des véhicules électriques.

A cet effet, l'invention vise un module d'alimentation pour moteur de véhicule électrique selon la revendication 1.

L'expression « véhicule électrique » désigne tout véhicule adapté à être propulsé au moins partiellement et au moins pendant certaines phases, par un moteur électrique. Cette expression inclut notamment les véhicules exclusivement électriques, les véhicules hybrides, les véhicules à assistance électrique, qu'ils soient des véhicules terrestres, maritimes, ou aériens, destinés à un usage particulier ou au transport de charges ou de passagers.

Le pont de commutateurs est un pont de commutateurs réversible présentant deux modes de fonctionnement : un mode chargeur dans lequel il est adapté à charger l'accumulateur électrique ; et un mode onduleur dans lequel il commande un moteur du véhicule électrique. Le pont de commutateurs forme ainsi un dispositif réversible chargeur et onduleur adapté d'une part à charger ledit accumulateur à partir d'une source d'énergie électrique externe et adapté d'autre part à convertir l'énergie électrique de l'accumulateur pour le pilotage d'un moteur du véhicule électrique.

L'accumulateur électrique peut être tout type de dispositif permettant d'accumuler de l'énergie électrique au sein d'un véhicule électrique et de fournir cette énergie à un moteur de traction pendant les phases de roulage. L'accumulateur électrique peut être une batterie d'accumulateurs ou un pack de cellules, par exemple un pack de batteries lithium-ion ou au plomb.au plomb.

Un autre objet de l'invention vise un pack d'alimentation pour véhicule électrique, comportant :
- une pluralité de modules tels que décrits ci-dessus ;
- un bus d'alimentation comportant des conducteurs, chaque connexion de sortie du bornier de chaque module étant branchée sur un desdits conducteurs ;
- un bus de synchronisation sur lequel est branchée la sortie de synchronisation de chaque module, de sorte que le dispositif de commande des commutateurs du pont de chaque module soit relié au bus de synchronisation.

L'invention permet d'assurer de manière modulaire l'alimentation électrique des moyens de propulsion d'un véhicule électrique, ainsi que la charge des accumulateurs électriques de ce véhicule. Dans un véhicule équipé d'un ensemble de tels modules, chaque module comporte son propre accumulateur électrique ainsi que son propre convertisseur permettant aussi bien la charge de l'accumulateur électrique que l'alimentation d'un moteur électrique du véhicule.

La sortie de synchronisation des modules d'alimentation permet à chacun de ces modules de synchroniser les tensions et/ou courants délivrés sur les tensions et/ou courant des autres modules. L'ensemble des modules assure ainsi, en commun, la délivrance d'une tension contrôlée (par exemple une tension sinusoïdale de commande de moteur) pour l'alimentation d'un moteur de traction du véhicule électrique ou la délivrance d'un courant contrôlé (par exemple une courant continu) pour la charge de l'accumulateur électrique en absorbant un courant contrôlé à partir de la source d'énergie électrique.

Un véhicule électrique peut être muni de plusieurs modules selon l'invention pour assurer l'accumulation d'énergie électrique nécessaire à l'autonomie du véhicule, et pour assurer la fourniture de cette énergie électrique à au moins un moteur électrique du véhicule. Ce caractère modulaire permet une intégration facilitée dans différents types de véhicules en divisant en modules le volume total requis pour l'accumulation de l'énergie électrique et pour la commande moteur. Les différents modules peuvent être positionnés dans les différents logements possibles du véhicule en exploitant au mieux l'espace disponible dans le véhicule.

Le nombre de modules peut être adapté à un véhicule particulier dans une configuration initiale, en fonction des besoins en capacité d'accumulateur électrique et/ou en puissance à fournir pour la traction du véhicule. Ce nombre peut être modifié dans le temps, lors d'un changement de configuration du véhicule, en ajoutant ou enlevant des modules par la suite.

Par ailleurs, les modules peuvent être réutilisés pour une deuxième utilisation dans le cadre d'une deuxième vie, pour un autre type de véhicule ou pour une application stationnaire. Pour cette deuxième utilisation, le stockage d'énergie électrique et le convertisseur du véhicules sont réutilisés dans une seconde utilisation, et non pas seulement le stockage d'énergie selon les solutions standards de l'état de l'art.

De préférence, les modules fournissent ensemble une tension sinusoïdale à une fréquence adaptée à tout instant à l'entrainement du moteur, lors de l'utilisation en traction. Ils fournissent ou absorbent des courants sinusoïdaux à la fréquence du réseau lors de la connexion au réseau pour le soutien au réseau ou la charge de la batterie. La synchronisation de plusieurs modules est ainsi facilitée.

En effet, il convient de rappeler qu'un onduleur selon l'état de l'art consiste en un condensateur de découplage qui constitue une réserve d'énergie à l'échelle temporelle des courants à fournir au moteur. Cet onduleur est généralement muni de trois bras d'onduleurs constitués chacun de deux transistors utilisés en commutation, classiquement des transistors IGBT. Les trois bras fournissent le courant aux trois bobinages d'un moteur triphasé. Dans ce cas, ce sont directement les tensions commutées par les bras qui sont appliquées aux bobinages du moteur. Une mesure de courant est placée dans chacun de ces bobinages. Pour assurer le niveau de courant dans chacun des bobinages moteur, correspondant au couple à fournir par le moteur suite à la sollicitation du conducteur sur la pédale d'accélérateur du véhicule, une régulation de courant pilote les temps de conduction des deux interrupteurs supérieur et inférieur de chaque bras. Pour un bobinage placé entre un premier bras et un second bras, si l'interrupteur supérieur du premier est fermé et si l'interrupteur inférieur du second est fermé, le courant traversant le bobinage placé entre le bras un et deux augmente. Pour un bobinage placé entre un premier bras et un second bras, si l'interrupteur inférieur du premier est fermé et si l'interrupteur supérieur du second est fermé, le courant traversant le bobinage placé entre le bras un et deux diminue. Si les deux interrupteurs supérieur ou inférieur des deux bras sont simultanément fermés, la tension appliquée au bobinage du moteur est nulle, et le courant évolue selon la valeur de la force électromotrice de celui-ci. Dans ces onduleurs de l'état de l'art, les bras de l'onduleur appliquent directement des niveaux de tension sur les bobinages du moteur, ce qui permet directement d'influer sur la variation de courant de chacun des bobinages, donc sur le couple du moteur. Principalement, le système à réguler est du premier ordre, c'est-à-dire qu'il répond directement, sans retard à la sollicitation.

Dans le cas de l'invention, les bras de l'onduleur ne pilotent pas directement le courant dans les bobinages du moteur. Les bras de l'onduleur permettent de piloter le courant dans les bobinages additionnels (l'ensemble de bobines raccordées au pont de commutateurs), pour obtenir une tension lissée en sortie, et de manière préférée une tension sinusoïdale, tension qui est appliquée aux bobinages moteur et qui fait alors varier le courant dans les bobinages. La régulation du couple moteur apparait donc un peu plus complexe du fait des retards apportés au sein de ce système qui amène à une régulation d'ordre supérieur. Ainsi, les performance en vitesse de régulation peuvent être un peu inférieure mais restent acceptables pour le pilotage moteur. Si cela s'avère nécessaire, pour gagner en vitesse de régulation du système, il faut abaisser la valeur de l'inductance de lissage et augmenter la fréquence de découpage. Ceci est rendu possible par les progrès réguliers des vitesse de commutation des transistors de puissance de type IGBT utilisés dans les onduleurs, et surtout par les composants à base de carbure de silicium qui se développent actuellement pour les onduleurs.

La fonction de traction du véhicule, c'est à dire de fourniture d'énergie électrique à la motorisation du véhicule, bénéficie du caractère modulaire apporté par l'invention grâce notamment aux avantages listés ci-dessous.

Comme la fonction d'accumulation électrique est rendue modulaire, la capacité d'accumulation peut être augmentée par la multiplication des modules avec un coût minimum et de manière simplifiée si l'on compare, par exemple, à la mise en parallèle de batteries, qui requiert des attentions particulières et complexes. De plus, la fonction de traction s'adapte de fait à cette variation de la capacité d'accumulation.

De la même manière, comme la fonction d'alimentation du moteur électrique est rendue modulaire, la puissance fournie au moteur peut être augmentée par la multiplication des modules avec un coût minimum et de manière simplifiée si l'on compare, par exemple, au changement d'un onduleur par un onduleur plus puissant.

Le caractère modulaire apporté par l'invention garantit de plus une tolérance aux pannes ou défauts aussi bien d'un accumulateur électrique que d'un pont de commutateurs employé comme onduleur, car un ensemble de modules selon l'invention continue à assurer sa fonction tant que l'un des modules reste fonctionnel.

L'inclusion de bobines dans le module d'alimentation permet l'alimentation d'un moteur de traction du véhicule électrique par des tensions électriques à variation lente (par exemple, des variations inférieures à 100 V/ps et de préférence proches d'une tension sinusoïdale), au lieu de l'alimenter, comme c'est le cas dans l'art antérieur, par des tensions hachées, c'est à dire par les tensions à front de commutation rapide (par exemple des tensions à variation de l'ordre de 1 kV/ps à quelques dizaines de kilovolts par microsecondes) issues directement d'un pont de commutation d'un onduleur.

L'alimentation du moteur s'effectuant par des tensions lissées et non des tensions hachées, les capacités parasites des bobinages moteurs ne sont pas traversées par des pics de courant à chaque front de tension des bras de commutateurs comme c'est le cas pour les solutions classiques selon l'état de l'art. Ces pics de commutations sont classiquement de très forts niveaux de perturbations électromagnétiques en courant conduit dans les fils qu'il faut traiter.

Par ailleurs, la puissance totale de traction étant délivrée par plusieurs modules, les puissances à commuter dans chaque pont de commutateurs sont plus faibles, les capacités parasites des bras de commutation et des inductances de lissage vis-à-vis des pièces mécaniques environnantes sont plus faibles ce qui permet de minimiser la taille et le coût des filtres nécessaires pour assurer la compatibilité électromagnétique de ces équipements.

De même, la répartition des puissances en différents modules entraine une sécurité accrue vis-à-vis des risques électriques.

La fonction de charge des accumulateurs d'énergie du véhicule bénéficie également du caractère modulaire apporté par l'invention grâce notamment aux avantages listés ci-dessous.

La charge est rendue modulaire car l'accumulateur électrique de chaque module est muni de son propre dispositif de charge. Au sein d'un ensemble de modules, chaque module peut donc recharger son accumulateur selon la stratégie la mieux adaptée. Des stratégies de charge peuvent être multiples, par exemple :
- tous les modules chargent ensemble leur accumulateur respectif lorsque qu'une importante puissance de charge est disponible (cas du véhicule électrique branché sur une borne de forte puissance) ;
- les modules chargent séquentiellement (l'un après l'autre) leur accumulateur respectif lorsqu'une faible puissance de charge est disponible (cas, par exemple, du véhicule électrique branché sur un réseau électrique domestique d'une habitation), la gestion de la file d'attente des modules pour la charge étant assurée grâce à la sortie de synchronisation et cette charge séquentielle évite le déclenchement des interrupteurs différentiels de l'installation ;
- seulement un ou plusieurs modules chargent leur accumulateur, les accumulateurs des autres modules n'étant pas chargés (cas, par exemple, d'un mode de fonctionnement dégradé avec un temps de charge limité ou une quantité d'énergie électrique limitée).

Un véhicule électrique équipé d'un tel ensemble de modules peut donc être muni d'une fiche, ou tout autre système de raccordement au réseau électrique, qui peut être dimensionnée au plus juste et qui peut être notamment simplifiée, avec une masse, un volume et un coût réduits.

Par ailleurs, l'invention rend possible la connexion directe du pont de commutateurs à l'accumulateur électrique car la déconnexion vis-à-vis de l'extérieur peut être assurée par un relai en sortie du module d'alimentation. Ce relai peut être inclus dans le module ou être disposé juste à sa sortie. Ce montage permet de se dispenser de circuit de précharge et de contacteurs internes entre le pont de commutateurs et l'accumulateur électrique. Les circuits de précharge sont des dispositifs utilisés dans l'art antérieur et nécessaires pour gérer la recharge des capacités d'un équipement lorsqu'il a été déconnecté d'un accumulateur électrique. Ces circuits de précharge sont ici supprimés puisque, au sein d'un module, l'accumulateur est en permanence connecté à son pont de commutateurs. Un dispositif de précharge ne sera nécessaire que lors de la première connexion de l'onduleur muni de son condensateur de filtrage au dispositif de stockage où lors de phase de maintenance nécessitant de déconnecter ces deux parties. Un tel dispositif de précharge est alors un outillage de montage en usine et pour les opérations de maintenance et non plus un dispositif intégré au véhicule.

Le module d'alimentation et la pack d'alimentation peuvent comporter les caractéristiques additionnelles décrites dans les sous-revendications, seules ou en combinaison.

L'invention peut être complétée avec une ou plusieurs des caractéristiques supplémentaires suivantes. Selon ces caractéristiques supplémentaires, un module d'alimentation pour moteur de véhicule électrique, comporte :
- un accumulateur électrique ;
- un pont de commutateurs raccordé à l'accumulateur électrique ;
- un boitier renfermant les éléments du module d'alimentation ;
- un dispositif de transfert thermique entre l'accumulateur électrique et le pont de commutateurs, ce dispositif de transfert thermique étant disposé dans le boitier.

Un conditionnement en température de l'accumulateur électrique est assuré, ce qui permet de limiter son excursion en température malgré les variations de températures de l'environnement. La température de l'accumulateur est maintenue dans la plage de température limitant le vieillissement, aussi bien en phase de traction que de charge.

Les accumulateurs électriques tels que des packs de batteries sont des dispositifs dont la plage de température de fonctionnement optimal est limitée. Pour les accumulateurs de type lithium ion, par exemple, les plages peuvent être de -10 C à 60 C en décharge et de 0 C à 45 C en charge. A basse température, la conductivité de l'électrolyte baisse, la résistance interne de l'accumulateur augmente et la capacité utilisable décroit. Les performances en décharge sont affectées en conséquence. Pour la charge à basse température, en dessous de 0 C et jusqu'à à 5 C classiquement, il y a de plus le risque de dépôt de lithium métal sur le graphite de l'électrode négative. La réaction normale d'insertion du lithium dans le matériau à base de carbone de l'électrode négative a un potentiel voisin de celle de la transformation du lithium-ion en lithium métal sous forme d'un dépôt de lithium métal à la surface de l'électrode. Cette réaction parasite dégrade l'accumulateur, fait décroître sa capacité et sa durée de vie. L'accélération du vieillissement des accumulateurs lithium-ion à haute température, à partir de 35 C classiquement, est bien connue. L'accélération du vieillissement par les phases charges à basse température a un impact au moins aussi important, surtout si des charges rapides à basse température sont souhaitées. Les pertes thermiques de est aussi utilisée. Il n'est pas nécessaire de mettre en fonctionnement un refroidissement tant que la température du dispositif de transfert thermique n'atteint pas un niveau de consigne de température haute.

Du côté du pont de commutateurs, le refroidissement de ce dernier est mutualisé avec le maintien en température de la batterie. La charge lente ou rapide peut s'effectuer sans refroidissement extérieur, et donc sans bruit de ventilation par exemple, la chaleur dégagée étant simplement stockée sous forme d'une élévation de la température de l'accumulateur électrique. Une production externe de chaleur est donc rarement nécessaire dans un tel véhicule, à la différence des véhicules de l'art antérieur dont certains consomment une énergie non négligeable pour maintenir, par temps froid, les batteries dans leur plage de température optimale. C'est seulement si la température de l'accumulateur devient trop élevée que le refroidissement sera nécessaire. C'est un avantage par rapport aux véhicules de l'art antérieur qui nécessitent généralement la mise en route du circuit du refroidissement du pont de commutateurs pour toutes les phases de charge. L'utilisation de dispositifs de refroidissement (par exemple par ventilation) reste nécessaire pour certaines phases, mais elle peut être minimisée en phase de charge.

Un circuit de refroidissement, associé au dispositif de transfert thermique, peut donc être prévu pour les phases où la température devient trop élevée pour l'accumulateur. Il est possible de plus d'ajouter au dispositif de transfert thermique un refroidissement puissant, à la fois pour l'accumulateur et pour les composants pont de commutateurs, pour les cas d'utilisation à fortes puissance de charge et/ou de décharge. Selon l'utilisation et le climat, il peut s'agir d'un refroidissement direct à air avec un échangeur fluide/air ou d'un refroidissement par pompe à chaleur afin de limiter la température du module à une valeur inférieure à la température de l'air disponible.

En employant un fluide diélectrique dans le dispositif de transfert thermique, une très forte tenue diélectrique (quelques kilovolts en continu, voire quelques dizaines de kilovolts) peut être obtenue entre les composants de l'accumulateur et la mécanique du véhicule, ainsi qu'entre les composants du pont de commutateurs et la mécanique du véhicule, et ce sans dégrader le transfert thermique permettant de refroidir ces composants. L'utilisation d'un fluide diélectrique permet aussi de diminuer très fortement les capacités parasites entre les parties du pont de commutateur soumises à un fort front de tension et les pièces mécaniques environnantes ainsi que entre l'inductance de filtrage et la mécanique. La diminution de ces capacités parasites se traduit directement par une baisse des courants conduits de mode commun à traiter par les dispositifs de filtrage de CEM.

La sécurité est renforcée vis-à-vis des risques d'emballement thermique des accumulateurs par la limitation de la vitesse de montée et de l'amplitude de la montée en température d'un accumulateur en cas de défaut de celui-ci. La sécurité est également renforcée vis-à-vis des risques d'emballement thermique des accumulateurs par limitation de la température à laquelle sont soumis les accumulateurs situés à proximité d'un accumulateur en défaut, ce qui implique une minimisation du risque de propagation de l'emballement thermique d'accumulateurs de proche en proche.

Il n'est ainsi pas nécessaire de recourir à une plaque à eau sur laquelle sont montés les commutateurs et permettant de refroidir le pont, comme il est courant dans l'art antérieur. Cette plaque à eau de l'art antérieur crée généralement des capacités parasites qui sont ici évitées.

Le module d'alimentation peut comporter les caractéristiques additionnelles suivantes, seules ou en combinaison :
- le dispositif de transfert thermique comporte au moins une enceinte étanche dans laquelle est contenu un fluide diélectrique qui baigne l'accumulateur électrique et le pont de commutateurs ;
- le module d'alimentation comporte un ensemble de bobines raccordées au pont de commutateurs, ces bobines étant également baignées dans le fluide diélectrique ;
- le boitier forme ladite enceinte étanche ;
- ladite enceinte étanche comporte une enceinte étanche disposée autour de l'accumulateur électrique ;
- ladite enceinte étanche comporte une enceinte étanche disposée autour du pont de commutateurs et communiquant avec l'enceinte étanche disposée autour de l'accumulateur électrique ;
- le module d'alimentation comporte un dispositif pour la circulation du fluide diélectrique ;
- l'enceinte étanche disposée autour de l'accumulateur électrique comporte un isolant thermique ;
- le module d'alimentation comporte un système d'arrêt du transfert thermique ;
- le pont de commutateurs est réversible en étant adapté à commander aussi bien la charge que la décharge de l'accumulateur électrique ;
- le module d'alimentation comporte une connexion hydraulique externe permettant l'échange thermique avec d'autres éléments du véhicule ;
- la connexion hydraulique externe est reliée à un dispositif de refroidissement.

L'invention peut être complétée avec une ou plusieurs des caractéristiques supplémentaires suivantes. Selon ces caractéristiques supplémentaires, un pack d'alimentation pour véhicule électrique comporte une pluralité de modules tels que décrits ci-dessus et dans lequel le fluide diélectrique circule d'un module à l'autre par la connexion hydraulique externe de chaque module.

Le pack d'alimentation peut comporter les caractéristiques additionnelles suivantes, seules ou en combinaison :
- l'un des modules est adapté à chauffer le fluide ;
- les modules d'alimentation ne sont pas refroidis durant l'alimentation du moteur ;
- le pack d'alimentation comporte au moins un terminal de charge permettant de relier le pack à un réseau électrique, la connexion hydraulique externe étant associée au terminal de charge, et le fluide diélectrique baigne également le terminal de charge.

Un exemple préféré de réalisation de l'invention va maintenant être décrit en référence aux dessins annexés dans lesquels :
- la figure 1 représente des modules d'alimentation d'un véhicule, selon l'invention ;
- la figure 2 illustre les tensions délivrées au moteur dans le montage de la figure 1 dans le cas où les tensions lissées sont parfaitement sinusoïdales ;
- la figure 3 est une variante de la figure 1 ;
- la figure 4 illustre une variante pour les modules d'alimentation de la figure 1 ;
- les figures 5 et 6 représentent des exemples de l'étage de filtrage de la figure 1 ;
- la figure 7 représente un dispositif d'échange thermique pour les modules de la figure 1 ;
- la figure 8 est une variante du dispositif d'échange thermique de la figure 7.

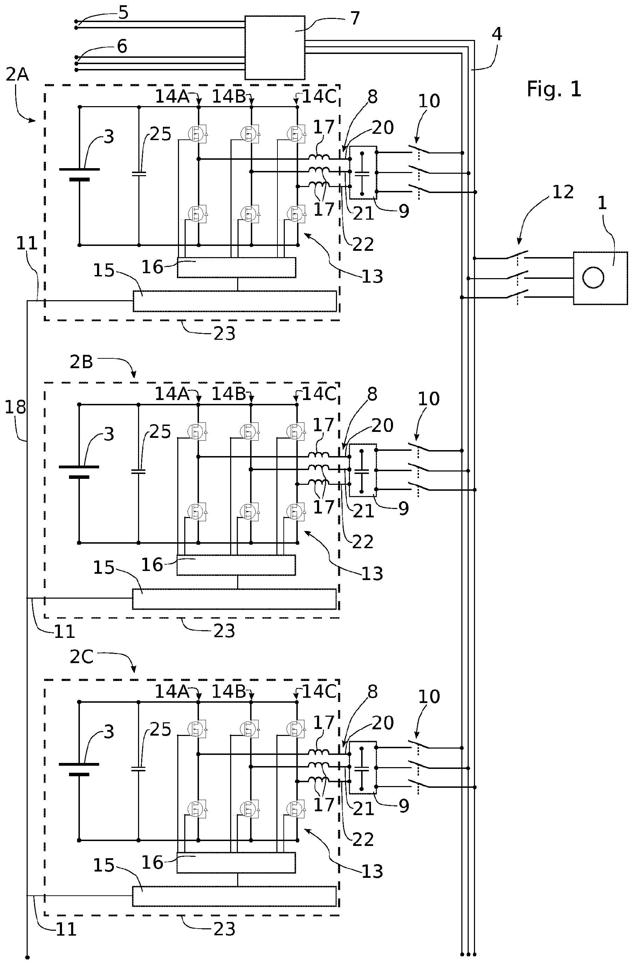

La figure 1 illustre un mode de réalisation visant un véhicule électrique qui comporte un moteur de propulsion 1 et, selon le présent exemple, trois modules d'alimentation 2A, 2B, 2C permettant l'alimentation électrique du moteur 1. Selon ce mode de réalisation, les modules 2A, 2B, 2C sont identiques et leurs éléments constitutifs seront désignés par les mêmes numéros sur les figures.

Bien que seuls trois modules 2A, 2B, 2C soient représentés sur la figure 1, le moteur 1 peut être alimenté par un pack d'alimentation comportant un nombre quelconque de ces modules.

Les modules d'alimentation 2A, 2B, 2C comportent chacun un accumulateur électrique 3 constitué, dans le présent exemple par des batteries lithium-ion. L'ensemble des batteries 3 de tous les modules 2A, 2B, 2C constitue la capacité en stockage d'énergie électrique permettant au véhicule électrique de se déplacer en autonomie.

Le véhicule électrique comporte un premier terminal de charge 5 monophasé et un deuxième terminal de charge 6 triphasé. Ces terminaux de charge 5, 6 permettent la charge de la batterie 3 de chaque module 2A, 2B, 2C et peuvent être constitués chacun d'une fiche électrique permettant le branchement du véhicule électrique au réseau monophasé domestique ou à un réseau triphasé plus puissant.

Le véhicule électrique comporte un bus d'alimentation 4 sur lequel est raccordé, directement ou indirectement, chaque module 2A, 2B, 2C et sur lequel sont raccordés les premier 5 et deuxième 6 terminaux de connexion via un commutateur de charge 7. Le commutateur de charge 7 peut être automatique ou manuel et permet de sélectionner laquelle, de la fiche monophasée 5 ou triphasée 6, sera utilisée pour la charge des batteries 3 en fonction des réseaux disponibles pour l'utilisateur au lieu où le véhicule se trouve.

Dans le présent exemple, le moteur 1 est un classique moteur triphasé. Le bus d'alimentation 4 est donc adapté à ce moteur 1 et comporte, en suivant cet exemple, trois conducteurs adaptés à délivrer au moteur 1 une alimentation alternative triphasée dont le courant, la tension, et/ou la fréquence sera pilotée en fonction de la conduite du véhicule. En variante, le moteur 1 peut être d'une quelconque technologie nécessitant une alimentation alternative, et peut comporter un nombre quelconque de pôles, et le nombre de conducteurs du bus d'alimentation 4 sera alors adapté au nombre de conducteurs nécessaires pour l'alimentation du moteur 1.

Les modules 2A, 2B, 2C comportent chacun un bornier 8 d'alimentation du moteur 1. L'ensemble des modules 2A, 2B, 2C assurent conjointement l'alimentation électrique du moteur 1 par leur bornier 8 d'alimentation du moteur. Chaque bornier 8 d'alimentation du moteur 1 comporte trois connexions de sortie 20, 21, 22, une pour chaque conducteur du bus d'alimentation 4. Ces connexions de sortie 20, 21, 22 sont reliées aux conducteurs du bus d'alimentation 4 par l'intermédiaire d'un étage 9 de filtrage à condensateurs (prévus pour assurer la compatibilité électromagnétique) et d'un relai 10 comportant un contact de relai pour chaque connexion de sortie 20, 21, 22, le relai 10 étant ainsi adapté à connecter ou déconnecter les connexions de sortie au bus d'alimentation 4.

En interne, le bornier 8 d'alimentation d'un module 2A, 2B, 2C est relié à un pont 13 de commutateurs. Chaque connexion de sortie du bornier 8 d'alimentation est reliée à un bras 14A, 14B, 14C du pont 13 de commutateurs, chaque bras 14A, 14B, 14C comportant deux commutateurs. Les commutateurs du pont 13 sont par exemple des transistors de puissance tels que des transistors à grille métal-oxyde (« MOS »).

Tous les commutateurs d'un pont 13 de commutateurs sont pilotés par un dispositif de commande constitué, dans le présent exemple, d'un microcontrôleur 15 associé à un circuit de commande 16 de grille (« gâte driver » en anglais). Ce dispositif de commande présente deux modes de fonctionnement : un mode chargeur dans lequel il est adapté à charger l'accumulateur électrique (3) depuis un réseau électrique ; et un mode onduleur dans lequel il commande un moteur du véhicule électrique.

Dans chaque module 2A, 2B, 2C, une bobine 17 est disposée entre chaque bras 14A, 14B, 14C du pont 13 de commutateurs et la connexion de sortie correspondante du bornier 8 d'alimentation. Chaque connexion de sortie du bornier 8 est donc relative à un bras 14A, 14B, 14C du pont 13 et sa bobine 17. Plus précisément, chaque bobine 17 est raccordée au point milieu d'un bras du pont 13 de commutateurs.

Le nombre de bras d'un pont 14 de commutateurs est égal : au nombre de pôles du moteur 1 ; au nombre de conducteurs du bus d'alimentation 4 ; et au nombre de bobines 17.

Les modules 2A, 2B, 2C de cet exemple incluent de plus une capacité 25 de filtrage classique mise en parallèle de la batterie 3.

Le moteur 1 est quant à lui relié au bus d'alimentation 4 par l'intermédiaire d'un relai 12 comportant des contact permettant de connecter ou déconnecter chaque conducteur d'alimentation du moteur à un conducteur respectif du bus d'alimentation 4.

Le pilotage de relais 10 et 12 permet d'obtenir toutes les combinaisons possibles de raccordement, via le bus d'alimentation 4, des modules 2A, 2B, 2C, du moteur 1, et des terminaux de charge 5, 6. Les combinaisons exploitées ici sont les suivantes :
- ouverture du relai 12 et fermeture de tous les relais 10 : tous les modules 2A, 2B, 2C sont reliés à un terminal de charge 5, 6 (phase de charge conjointe de tous les modules) ;
- ouverture du relai 12 et fermeture du relai 10 d'au moins un module, tandis que le relai 10 d'au moins un autre module est maintenu ouvert : seuls certains modules 2A, 2B, 2C sont reliés à un terminal de charge 5, 6 (phase de charge mais seulement des modules connectés) ;
- fermeture du relai 12 et fermeture du relai 10 d'au moins un module, tandis que le relai 10 d'au moins un autre module est maintenu ouvert (les terminaux de charge 5, 6 étant déconnectés du réseau électrique) : seuls certains modules 2A, 2B, 2C sont reliés au moteur 1 (phase de roulage avec seulement les modules connectés qui alimentent le moteur 1) ;
- fermeture du relai 12 et fermeture de tous les relais 10 : tous les modules 2A, 2B, 2C sont reliés au moteur 1 (phase de roulage avec tous les modules qui alimentent le moteur 1).

Les bobines 17 des modules 2A, 2B, 2C et les étages de filtrage 9 permettent aux modules 2A, 2B, 2C de délivrer au moteur, pour l'alimentation de ce dernier, une tension lissée adaptée aux bobinages des moteurs, classiquement il s'agit d'une tension sinusoïdale lissée. Le pilotage des commutateurs du pont 13 est donc réalisé en vue de fournir une telle tension sinusoïdale lissée dont l'amplitude et la fréquence correspondent à ce qu'il faut fournir au moteur 1 pour répondre à la demande du conducteur.

Les modules 2A, 2B, 2C comportent de plus une sortie de synchronisation 11 reliée au circuit de commande des commutateurs du pont 13, et reliée plus précisément ici au microcontrôleur 15. Les sorties de synchronisation 11 de tous les modules 2A, 2B, 2C sont reliées à un bus de synchronisation 18. Cette synchronisation peut être matériellement réalisée grâce à un module de synchronisation externe (non représenté) et également relié au bus de synchronisation 18. Chaque module 2A, 2B, 2C comporte alors une commande rapprochée constituée par le microcontrôleur 15 et le circuit de commande de grille 16, tandis que le système dans son ensemble comporte une commande d'un niveau au-dessus (le module de synchronisation externe) dédiée à la synchronisation des modules pour fournir des tensions ou fournir ou absorber des courants de même fréquence et de même phase..

En variante, dans l'exemple illustré, la synchronisation des commutations des ponts 13 est réalisée en prévoyant une architecture maitre-esclave pour les modules 2A, 2B, 2C dans laquelle l'un des modules est déclaré « maitre », de sorte que les autres modules, déclarés comme « esclaves », se synchronisent sur ce module maitre à partir des informations que ce dernier met à disposition sur le bus de synchronisation.

L'architecture modulaire qui vient d'être décrite fonctionne de la manière indiquée ci-après.

Chaque module d'alimentation 2A, 2B, 2C comporte un boitier 23 (schématisé en pointillés sur la figure 1) muni d'un ensemble de connexions externes. Ces connexions externes comportent notamment le bornier 8 d'alimentation du moteur 1 et comportent la sortie de synchronisation 11. Chaque module est un sous-ensemble physiquement séparable du reste de l'architecture. Un dispositif, par exemple de type « rack », peut être prévu pour faciliter l'insertion et le retrait des modules d'alimentation 2, en recevant et maintenant mécaniquement le module 2A, 2B, 2C et en présentant des connexions mâle-femelle propres aux connexions de son bornier 8 et de sa sortie de synchronisation 11.

Un véhicule électrique ainsi équipé peut recevoir, branché sur le bus d'alimentation 4 et sur le bus de synchronisation. 18, un ensemble de modules d'alimentation 2A, 2B, 2C dont le nombre est adapté à la puissance de traction du moteur 1 et à l'autonomie recherchée pour le véhicule. Les modules 2, mêmes s'ils répondent à la description fonctionnelle exposée précédemment, ne sont pas forcément identiques. Ils peuvent présenter notamment des capacités de batterie 3 différentes ou des puissances fournies différentes. L'architecture modulaire fournit des packs batteries-convertisseurs permettant le couplage de batteries hétérogènes en tension, technologies, capacités, etc. Les modules d'alimentation 2, se présentant sous la forme de boiter 23, comme des briques élémentaires, peuvent être assemblées en fonction de critères aussi variés que le besoin en énergie du véhicule, les modules disponibles, ou le coût de l'ensemble. L'ensemble peut évoluer dans le temps par l'addition, la suppression, ou le remplacement de modules d'alimentation au cours du temps.

Lorsqu'un véhicule électrique équipés des modules d'alimentation 2A, 2B, 2C est en configuration de charge de batteries, les relais 10 des modules à charger sont fermés, le relai 12 du moteur est ouvert, et l'un des terminaux de charge 5, 6 est branché sur le réseau électrique. La tension du réseau électrique est alors disponible pour chaque module 2A, 2B, 2C sur le bus d'alimentation 4. Chacun des modules 2A, 2B, 2C peut donc, indépendamment, piloter son pont 13 en redresseur pour absorber un courant classiquement sinusoïdal pour recharger sa batterie 3. L'absorption d'un courant sinusoïdal à partir de la source d'énergie est classiquement nécessaire pour respecter les contraintes normatives sur les harmoniques réseaux.

Le fonctionnement en phase de charge étant élévateur, il est nécessaire que la tension de la batterie soit, à tout instant, supérieure à la tension fournie par le réseau. Cette contrainte peut être respectée par un dimensionnement avec une plage de tension autorisée pour la batterie qui est toujours supérieure à la valeur crête de la tension réseau dans toute sa plage de variation.

En phase de charge, le moteur 1 n'est pas connecté à la source d'énergie puisque le relai 12 est ouvert. Les capacités parasites du moteur ne donnent alors pas lieu à un courant de fuite traversant le disjoncteur différentiel de l'installation. En phase de charge (c'est-à-dire lorsque les relais 10, 12 sont pilotés en position de charge batterie et pas en position de fonctionnement moteur, mais sans pour autant charger la batterie), les modules peuvent aussi fournir de l'énergie active ou réactive au réseau pendant une partie de la durée de la phase de charge, si de telles fonctions de soutien au réseau sont souhaitées.

En plus de la charge simultanée de tous les modules, diverses autres stratégies de charge peuvent être implémentées grâce au bus de synchronisation. Par exemple :
- les modules peuvent être chargés séquentiellement, éventuellement dans un ordre précis, ce qui permet de s'adapter à la puissance de charge disponible ou de garantir le non déclenchement de l'interrupteur différentiel lorsque le véhicule est branché sur un réseau électrique domestique. Le fonctionnement séquentiel de la charge des modules permet de n'appliquer entre les phases et la masse que les condensateurs d'un module et non les condensateurs de tous les modules. Le courant sur le câblage de terre pouvant faire disjoncter le disjoncteur différentiel de l'installation est réduit d'autant ;
- un module déterminé est chargé au maximum et ensuite seulement tous les autres modules sont chargés simultanément ;
- seulement certains modules sont chargés et d'autres non ;
- certains modules sont partiellement chargés, par exemple à 50 % de leur capacité, tandis que d'autres modules sont chargés au maximum.

Par ailleurs, lorsqu'un véhicule électrique équipés des modules d'alimentation 2A, 2B, 2C est en configuration de roulage, les relais 10 des modules à charger sont fermés, le relai 12 du moteur est également fermé, et les terminaux de charge 5, 6 sont débranchés du réseau électrique. Les modules 2A, 2B, 2C vont donc alimenter électriquement, via le bus d'alimentation 4, le moteur 1 pour la propulsion du véhicule électrique.

De même que précédemment, différentes stratégies d'alimentation du moteur 1 peuvent être prévues. Par exemple :
- tous les modules alimentent simultanément le moteur ;
- seulement certains modules alimentent conjointement le moteur ;
- les modules alimentent le moteur un par un, séquentiellement (éventuellement dans un ordre déterminé), de sorte que lorsqu'un module est déchargé, le module suivant prend le relai ;
- tous les modules dont la charge est au-dessus d'un seuil prédéterminé (par exemple 10 % de leur capacité) alimentent le moteur, et lorsqu'un module passe en dessous de ce seuil, il n'alimente plus le moteur (son relais 10 peut alors être ouvert) ;
- certains modules sont gardés comme réserve : ils n'alimentent pas le moteur en temps normal et deviennent opérationnel seulement lorsque tous les autres modules sont déchargés ;
- l'un des modules (ou chacun des modules, séquentiellement) est déchargé au maximum pour recaler les indicateurs d'état de charge et d'état d'énergie. En effet, un système de gestion de batterie est souvent associé aux batteries 3, ce système comportant des indicateurs comme l'état de charge d'une batterie ou comme l'état d'énergie, ou état de santé, qui correspond au pourcentage entre la capacité réelle de la batterie et sa capacité initiale. Ces indicateurs nécessitent périodiquement une décharge complète de la batterie pour recaler leur zéro, c'est-à-dire pour réaliser une tare. Or, les véhicules électriques sont rarement complètement déchargés et certaines batteries peuvent être mises en charge régulièrement sans jamais être complètement déchargées ce qui conduit à des indicateurs flottants et perdant, dans le temps, leur référence initiale. Cette mesure permet au contraire de décharger complètement un module, de tarer les indicateurs liés à la batterie, tout en assurant, en sécurité, la traction du véhicule par les autres modules d'alimentation ;
- les modules peuvent coopérer pour que l'un procède à un équilibrage intercellulaire de sa batterie, grâce à l'alimentation en tension continue d'au moins un autre module. Il n'est donc plus nécessaire d'attendre une phase de charge pour procéder à l'équilibrage intercellulaire d'un module. En effet, certaines batteries peuvent nécessiter une telle opération d'équilibrage intercellulaire au cours de laquelle la batterie (normalement en phase de charge) procède à l'équilibrage des cellules la constituant sous une tension de charge.

Optionnellement, un module 2A, 2B, 2C peut également inclure un système de gestion de batterie pour son accumulateur électrique. Les indicateurs du système de gestion de batterie peuvent être recalés comme indiqué ci-dessus.

Lorsque plusieurs modules 2A, 2B, 2C alimentent simultanément le moteur 1, une synchronisation des tensions fournies est prévue pour que le moteur reçoive une forme de tension adaptée à ce qu'il doit fournir pour la traction du véhicule. Par exemple, l'enfoncement de la pédale d'accélérateur du véhicule se traduit par une demande de couple à fournir par le moteur 1. Dans ce cas, plutôt que de fournir, comme il est courant dans l'art antérieur, une tension hachée dont les largeurs d'impulsion vont être revues à la hausse, le système selon l'invention va fournir au moteur une tension sinusoïdale lissée dont les caractéristiques en tension, fréquence et phase vont être adaptées à cette demande de couple.

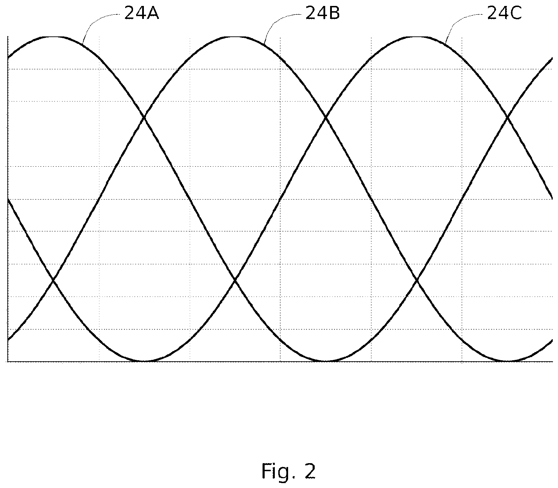

La figure 2 illustre schématiquement les profils que peuvent avoir les tensions fournies au moteur 1. La figure 2 comporte trois courbes 24A, 24B, 24C relatives aux trois conducteurs alimentant le moteur 1 (et relatives donc aux trois conducteurs du bus d'alimentation 4). Chacune de ces courbes 24A, 24B, 24C représente la tension fournie par deux de ces conducteurs. Chacune de ces courbes 24A, 24B, 24C a une forme proche d'une sinusoïde. Son profil peut néanmoins être crénelé mais il se rapproche toujours de la forme générale d'une sinusoïde ce qui illustre que la commande du moteur n'est pas réalisée par un hachage (tel qu'une modulation de largeur d'impulsions) mais est réalisée par une modulation des caractéristiques des sinusoïdes telles que l'amplitude, la fréquence et le déphasage entre les sinusoïdes.

La forme de ces sinusoïdes résulte de la superposition des tensions fournies par l'ensemble des modules 2A, 2B, 2C opérationnels. Bien que ces tensions soient produites par commutations du pont 13, elles sont lissées par la présence de la bobine 17. Cette présence de la bobine 17 est primordiale car elle permet la réalisation pratique de la synchronisation des modules 2A, 2B, 2C. En effet, si les modules devaient se synchroniser dans une échelle de temps compatible avec la commutation du pont 13 (autrement dit, si les commutateurs du pont 13 de différents modules devaient commuter simultanément), la synchronisation serait difficile et coûteuse à réaliser. Selon l'invention, l'échelle de temps permise pour la synchronisation des modules est bien plus importante grâce à la bobine. La production d'une courbe de tension lissée permet un certain décalage entre les commutations des ponts 13 des divers modules, ce qui n'empêche pas une courbe résultante se rapprochant d'une sinusoïde.

Ainsi, que la synchronisation soit réalisée à partir d'un module de synchronisation externe ou à partir du module d'alimentation déclaré maitre (dans une architecture maitre-esclave), ce module peut mettre à disposition sur le bus de synchronisation 18 des informations telles qu'un top de synchronisation, ainsi que l'amplitude et la fréquence de la tension à fournir. Ces différentes informations peuvent par exemple être fournies par un réseau numérique de type CAN. Tous les autres modules d'alimentation commutent ensuite leur pont 13 respectif pour atteindre ce même résultat, sans synchroniser précisément les commutations de chaque commutateur. Alternativement, le module maitre (ou un module de synchronisation externe) peut aussi mettre à disposition sur le bus de synchronisation 18 une consigne de forme de tension à obtenir et, de même, les autres modules d'alimentation fournissent cette forme d'onde comme un résultat, sans présager des commutations nécessaires à l'obtention de ce résultat. Des modules d'alimentation hétérogènes en matière d'électroniques de commutation peuvent ainsi être employés ensembles dans le même véhicule.

Dans un mode de réalisation particulièrement avantageux, les commutateurs des ponts 13 sont réalisés par des transistors de puissance à grille métal-oxyde à carbure de silicium (« MOS SiC ») qui sont des semi-conducteurs à grand gap, c'est à dire à large bande interdite. Ces transistors commutent plus vite que les transistors de puissance classiques tels que des MOSFET et permettent ainsi de produire, par les modules d'alimentation, des tensions à des fréquences plus élevées ce qui permet l'emploi de bobines 17 de plus faible valeur.

Dans le présent exemple, les bobines 17 peuvent avoir une valeur d'inductance de 10 à 100 pH.

Dans l'art antérieur, l'augmentation des fréquences de commutation à des niveaux permis par les transistors de puissance MOS SiC induit des difficultés liées à la compatibilité électromagnétique lors de l'alimentation du moteur par une tension hachée à de telles fréquences. Selon l'invention, les hautes fréquences de commutation ne génèrent pas de difficultés sur ce plan car chaque module ne fournit qu'une tension sinusoïdale n'induisant pas de problèmes de compatibilité électromagnétique. La compatibilité électromagnétique n'est à traiter qu'au sein de chaque module d'alimentation, dans un périmètre limité avec les capacités parasites soumises aux fronts de commutation réduites, grâce à l'étage de filtrage 9, qui peut être de plus intégré au module d'alimentation.

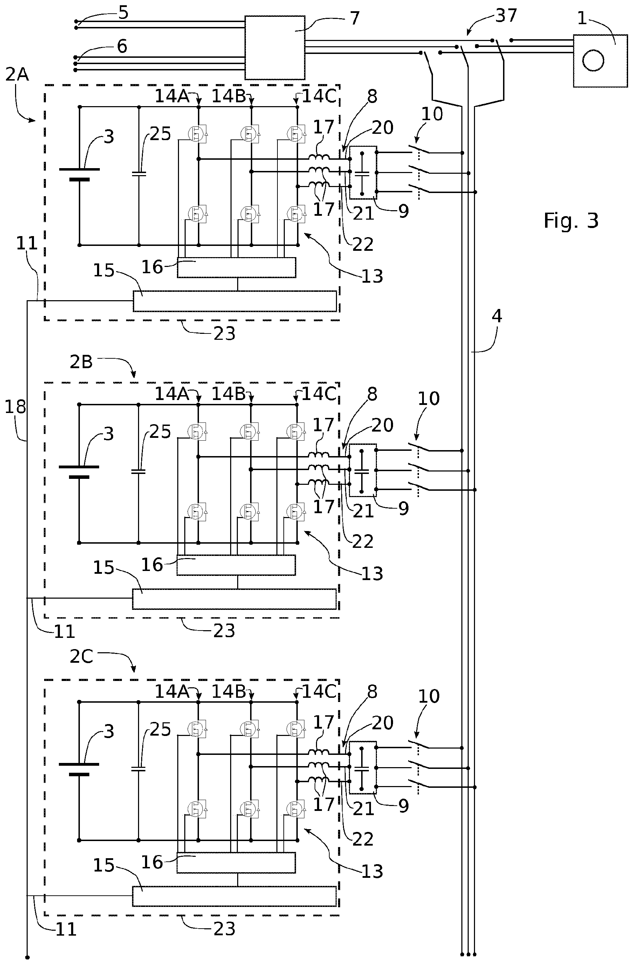

La figure 3 illustre une forme alternative à la réalisation de la figure 1 : le relai 12 du moteur est remplacé par un commutateur 37 comportant des contacts à trois voies permettant au bus de synchronisation 4 d'être relié soit au commutateur de charge 7, soit au moteur 1. Cette forme alternative permet les mêmes fonctions que celles décrites pour la figure 1.

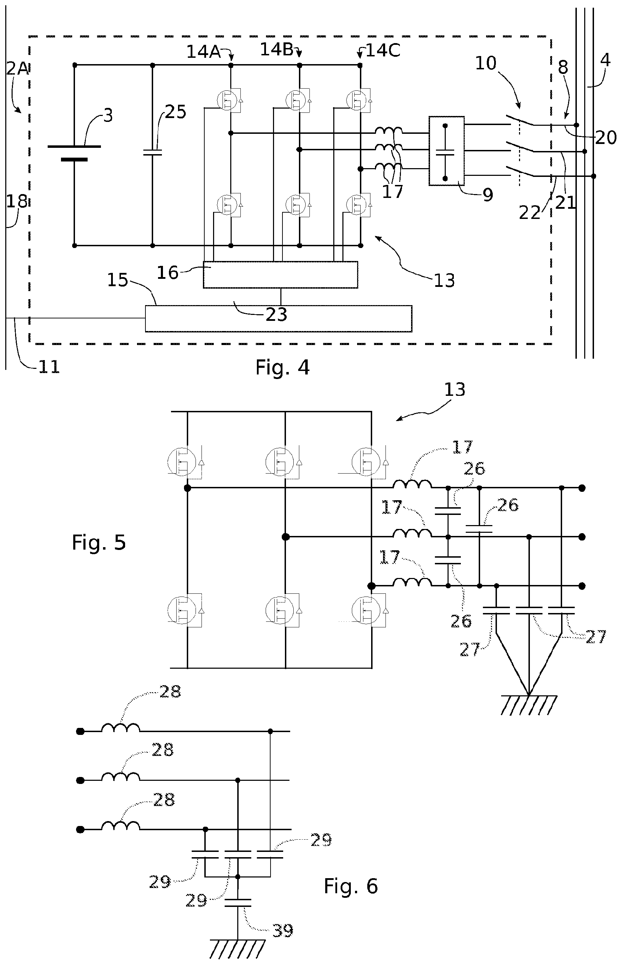

La figure 4 illustre quant à elle une variante pour les modules d'alimentation de l'exemple de la figure 1. Selon cette variante, tous les modules, ou certains d'entre eux, peuvent intégrer dans leur boitier 23 l'étage de filtrage 9 et/ou le relai 10. Les modules d'alimentation 2A, 2B, 2C intègrent alors ces fonctions supplémentaires et le bornier 8 est donc situé après le relai 10. L'architecture du côté du véhicule électrique est ainsi simplifiée.

Les figures 5 et 6 illustrent des modes de réalisation de l'étage de filtrage 9 pour un module d'alimentation 2A, 2B, 2C.

Sur la figure 5, seul le pont 13 et les bobines 17 d'un module d'alimentation ont été représentés pour simplifier la figure. L'étage de filtrage 9 est ici réalisé par trois condensateurs 26 placés chacun entre deux bobines 17, ainsi que par trois condensateurs 27 disposés chacun entre une bobine 17 et la masse.

La figure 6 représente un étage de filtrage supplémentaire qui peut être placé en série avec l'étage de filtrage de la figure 5. Cet étage de filtrage assure un filtrage de mode commun et de mode différentiel grâce à trois bobines 28 associées à trois condensateurs 29 montés en étoile et un condensateur 39 reliant le point milieu de l'étoile à la masse.

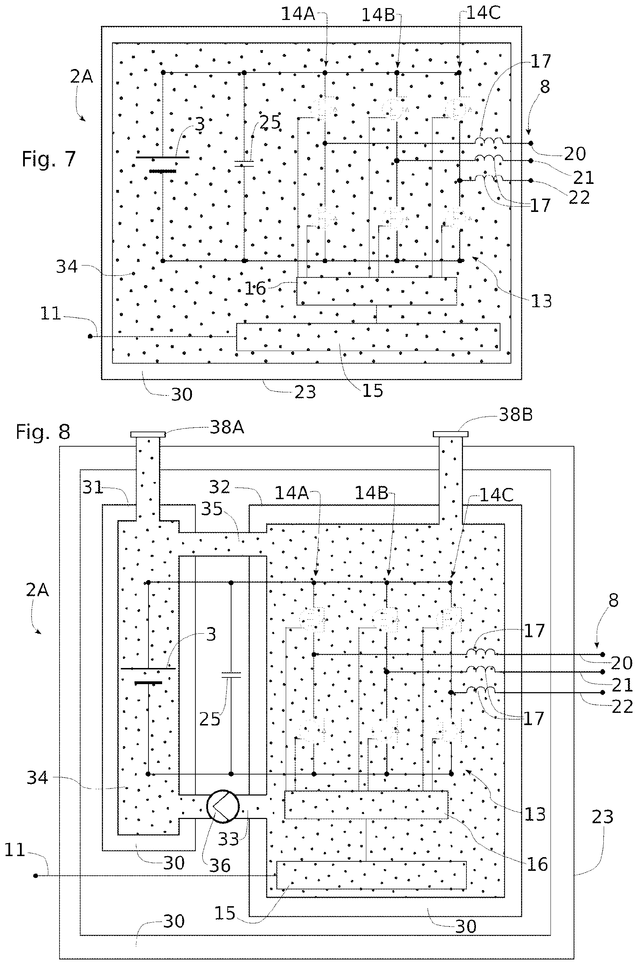

En référence aux figures 7 et 8, tous les modules, ou certains d'entre eux, peuvent être munis d'un dispositif de transfert thermique entre l'accumulateur électrique et le pont de commutateurs.

La figure 7 illustre un module d'alimentation 2A identique à ceux de l'exemple de la figure 1, muni d'un tel dispositif de transfert thermique. Le module 2A est de préférence isolé de l'extérieur grâce à un isolant thermique 30 associé au boitier 23. Le boitier 23 forme une enceinte étanche contenant tous les éléments du module 2A. Le volume interne délimité par cette enceinte étanche est rempli d'un fluide diélectrique caloporteur 34. Des dispositifs de type presse-étoupe sont prévus pour permettre les sorties électriques, notamment le bornier 8 et la sortie de synchronisation 11. La batterie 3, les commutateurs du pont 13 de commutateurs, et les bobines 17 sont donc baignés dans le fluide diélectrique 34, ce qui permet un échange thermique entre la batterie 3 et les autres composants du module 2A. Dans cet exemple, la circulation du fluide diélectrique 34 est passive et se déroule par convection. En variante, un dispositif mécanique peut être employé pour créer une circulation du fluide dans le boitier 23.

La figure 8 illustre un deuxième mode de réalisation du dispositif de transfert thermique. L'illustration reprend certains éléments de l'exemple de la figure 7, avec la même numérotation. Selon ce deuxième mode de réalisation, la batterie 3 est disposée dans une première enceinte étanche 31 et le pont 13 de commutateurs est disposé dans une deuxième enceinte étanche 32. L'enceinte 31 comporte un isolant thermique 30 pour maintenir la batterie en température. Optionnellement, l'enceinte 32 et/ou le boitier 23 comportent également un isolant thermique 30. Les enceintes étanches 31, 32 communiquent par un premier canal 33 et un deuxième canal 35. Le volume délimité par les enceintes étanches 31, 32 et les canaux 33, 35 est rempli d'un fluide diélectrique caloporteur 34. Une pompe 36 est disposée dans le premier canal 33 pour faire circuler le fluide diélectrique 34 entre l'enceinte 31 et l'enceinte 32. Le passage des conducteurs électriques est assuré par des dispositifs de type presse-étoupe prévus ici sur le boiter 23 et les enceintes 31, 32. La batterie 3 et les commutateurs du pont 13 de commutateurs sont donc baignés dans le fluide diélectrique 34, ce qui permet un échange thermique entre la batterie 3 et le pont 13.

Dans les deux modes de réalisation relatifs aux figures 7 et 8, la batterie 3 est en contact thermique avec des composants soumis à des pertes thermiques significatives (transistors de puissance et/ou bobines).

Dans le cas où les commutateurs du pont 13 sont réalisés par des transistors de puissance à grille métal-oxyde à carbure de silicium, comme décrit précédemment, les bobines 17 peuvent être de dimension réduite et seront donc plus facilement intégrées, avec leur éventuel noyau magnétique par exemple à base de ferrite ou de matériaux amorphes, dans l'enceinte contenant le fluide caloporteur 34 comme dans le mode de réalisation de la figure 7, pour y être complètement immergées.

Les isolants thermiques 30 servent à minimiser les échanges thermiques avec l'extérieur et obtenir une constante de temps thermique qui permettre de maintenir les accumulateurs à des températures optimales grâce aux pertes dégagées par l'électronique de puissance lors des phases de roulage et de charge.

La charge de la batterie peut s'effectuer sans ventilation (et donc sans le bruit associé), la chaleur dégagée étant simplement stockée sous forme de chaleur sensible par une élévation de la température de l'accumulateur électrique 3. C'est seulement si la température de l'accumulateur électrique 3 devient trop élevée qu'un refroidissement externe sera nécessaire.

Dans le cas des modules conformes à la figure 4, l'étage de filtrage 9 et le relai 10 du module sont avantageusement baignés également dans le fluide diélectrique 34.

De manière préférée, le fluide diélectrique 34 est un substitut d'huile minérale diélectrique à base d'ester. Ce type de produit associe une très bonne tenue diélectrique avec une biodégradabilité élevée et est difficilement inflammable.

L'immersion de la batterie 3, surtout lorsqu'elle est de type lithium-ion, dans le fluide diélectrique 34 augmente la sécurité du fait du transfert thermique amélioré qui limite la montée en température et peut empêcher l'atteinte d'un seuil critique en température provoquant l'emballement de l'accumulateur.

Optionnellement, le module d'alimentation peut comporter une connexion hydraulique externe comportant par exemple une entrée 38A et une sortie 38B (représentée à la figure 8) permettant une circulation du fluide diélectrique avec l'extérieur du module 2A. Pour les véhicules, et plus particulièrement pour les véhicules volants, qui nécessitent une recharge rapide tout en conservant le conditionnement en température de la batterie, les modules d'alimentation ne nécessitent pas de refroidissement de la batterie pendant le roulage ou le vol. En conséquence, selon un mode de réalisation, les modules d'alimentation 2A, 2B, 2C ne sont pas refroidis durant l'alimentation du moteur 1. La charge rapide est ensuite réalisée avec un refroidissement puissant de la batterie et de l'onduleur par circulation externe au véhicule ou à l'aéronef du fluide diélectrique 34, le fluide étant refroidi, grâce à la connexion hydraulique 38A, 38B, par exemple par un échangeur externe (non représenté), par la station de charge, ou en étant remplacé par une autre quantité de fluide à une température choisie. Les terminaux de charge 5, 6 peuvent alors assurer, en plus des contacts électriques, les connexions hydrauliques pour la circulation du fluide. Le fluide diélectrique peut dans ce cas être utilisé aussi pour refroidir les câbles électriques et les connexions associées. Dans un pack d'alimentation comportant des modules 2A, 2B, 2C et les terminaux de charge 5, 6, la connexion hydraulique externe 38A, 38B peut ainsi être associée aux terminaux de charge 5, 6, et le fluide diélectrique 34 baigne alors également les terminaux de charge 5, 6. L'utilisateur branche dans ce cas une seule fiche sur la station de charge, cette fiche comportant les terminaux de charge 5, 6 ainsi que l'entrée 38A et la sortie 38B de la connexion hydraulique externe.

Optionnellement, le dispositif de transfert thermique peut comporter un système d'arrêt du transfert thermique qui peut être utilisé lorsque la température de la batterie est déjà proche de la limite haute de sa plage de température optimale et qu'il n'est donc pas opportun de la chauffer. Ce système d'arrêt du transfert thermique peut être constitué par exemple d'une vanne disposée sur l'un des canaux 33, 35 associée éventuellement à une conduite de dérivation (non représentés).

La connexion hydraulique externe 38A, 38B permet également de faire circuler le même fluide diélectrique 34 dans plusieurs modules d'alimentation 2A, 2B, 2C, de sorte à mutualiser le fluide diélectrique 34 pour plusieurs modules.

Dans le cadre de l'invention, il est choisi d'utiliser les pertes des ponts 13 de commutateurs pour réchauffer ou maintenir en température les accumulateurs électriques par temps froid, et d'utiliser la capacité calorifique des accumulateurs électriques comme stockage thermique des pertes des ponts 13 de commutateurs. Le refroidissement des ponts 13 et des accumulateurs électriques 3 est mutualisé. L'inertie thermique de la batterie 3 est utilisée pour stocker les calories correspondant aux pertes de l'électronique de puissance.

Selon un mode de réalisation, la stratégie d'alimentation électrique du moteur peut être prévue, grâce au bus de synchronisation, pour que l'un des modules 2A, 2B, 2C soit mis à contribution pour, non pas alimenter le moteur 1 comme les autres modules, mais pour dissiper de la puissance réactive afin de chauffer le fluide diélectrique 34. Ceci permet d'augmenter économiquement la température de la batterie 3 lorsque la température ambiante est faible (en hiver).

Les modules d'alimentation 2A, 2B, 2C peuvent de plus avoir une deuxième vie après une première vie dans un véhicule électrique. Lorsque, par exemple, un véhicule électrique est détruit ou que des module d'alimentation 2A, 2B, 2C ne sont plus assez performants pour ce véhicule (par vieillissement de la batterie 3), les modules d'alimentation 2A, 2B, 2C concernés peuvent ensuite être réutilisés dans d'autres véhicules ou, par exemple pour des applications stationnaires, moins exigeantes. Les modules d'alimentation 2A, 2B, 2C peuvent, au cours de cette seconde vie, être assemblés selon une architecture modulaire dont chaque brique comporte son propre accumulateur d'énergie et son convertisseur (le pont 13) avec son électronique de pilotage lui permettant de fonctionner comme un onduleur délivrant une tension alternative.

L'entité désignée ci-dessus comme « l'ensemble de connexion », et qui comporte le bornier 8 et la sortie de synchronisation 11, est composée de connexions déconnectables. Ainsi, chacun des modules 2A, 2B, 2C est un module déconnectable du reste du système. De préférence, l'ensemble de connexion embarque sur un même connecteur le bornier 8 et la sorte de synchronisation, ce connecteur étant de type « enfichable » ou de tout autre type facilement déconnectable et reconnectable. Chacun des modules 2A, 2B, 2C se présente ainsi comme un rack qui peut être facilement enlevé ou ajouté au système complet et respectivement relié ou déconnecté du système complet.

D'autres variantes de réalisation du peuvent être mises en oeuvre sans sortir du cadre de l'invention. Par exemple, le moteur 1 peut être un ensemble de plusieurs moteurs. L'architecture peut comporter plusieurs moteurs alimentés chacun par plusieurs modules grâce à des relais.

## Revendications

1. Module d'alimentation (2A, 2B, 2C) pour moteur (1) de véhicule électrique, comportant :
- un accumulateur électrique (3) ;
- un pont (13) de commutateurs réversible directement raccordé à l'accumulateur électrique (3) ;
- un dispositif de commande (15, 16) des commutateurs du pont (13) de commutateurs présentant deux modes de fonctionnement : un mode chargeur dans lequel il est adapté à charger l'accumulateur électrique (3) depuis un réseau électrique ; et un mode onduleur dans lequel il commande un moteur du véhicule électrique ;
- un ensemble de bobines (17) raccordées au pont (13) de commutateurs ;
- un boitier (23) renfermant les éléments du module d'alimentation, ce boitier étant muni d'un ensemble de connexions externes déconnectables qui comportent : un bornier (8) d'alimentation du moteur (1) muni du même nombre de connexions de sortie (20, 21, 22) que le nombre de bobines (17) dans l'ensemble de bobines ; et une sortie de synchronisation (11) reliée au dispositif de commande (15, 16) des commutateurs du pont (13) de commutateurs, cette sortie de synchronisation étant adaptée à la synchronisation des tensions et/ou courants délivrés sur les tensions et/ou courants d'autres modules, lorsque le module d'alimentation est connecté à d'autres modules ; chaque bobine (17) de l'ensemble de bobines étant raccordée entre le point milieu d'un bras du pont (13) de commutateurs et la connexion de sortie (20, 21, 22) correspondante du bornier (8) d'alimentation du moteur (1).

2. Module d'alimentation selon l'une quelconque des revendications précédentes, **caractérisé en ce que** l'ensemble de bobines (17) est directement raccordé au pont (13) de commutateurs.

3. Module d'alimentation selon l'une quelconque des revendications précédentes, **caractérisé en ce qu'**il comporte en outre, entre l'ensemble de bobines (17) et le bornier (8) d'alimentation du moteur (1), un étage (9) capacitif de filtrage.

4. Module d'alimentation selon l'une quelconque des revendications précédentes, **caractérisé en ce qu'**il comporte en outre, entre l'ensemble de bobines (17) et le bornier (8) d'alimentation du moteur (1), au moins un relai (10) comportant un contact de relai pour chaque connexion de sortie (20, 21, 22) du bornier (8) d'alimentation du moteur.

5. Module d'alimentation selon l'une quelconque des revendications précédentes, **caractérisé en ce que** le pont (13) de commutateurs est réversible en étant adapté à commander aussi bien la charge que la décharge de l'accumulateur électrique (3).

6. Pack d'alimentation pour véhicule électrique, **caractérisé en ce qu'**il comporte :
- une pluralité de modules selon l'une des revendications 1 à 5 ;
- un bus d'alimentation (4) comportant des conducteurs, chaque connexion de sortie (20, 21, 22) du bornier (8) de chaque module (2A, 2B, 2C) étant branchée sur un desdits conducteurs ;
- un bus de synchronisation (18) sur lequel est branchée la sortie de synchronisation (11) de chaque module (2A, 2B, 2C), de sorte que le dispositif de commande (15, 16) des commutateurs du pont (13) de chaque module (2A, 2B, 2C) soit relié au bus de synchronisation (18).

7. Pack d'alimentation selon la revendication 6, **caractérisé en ce qu'**il comporte un commutateur de charge (7) relié d'une part au bus d'alimentation (4) et relié d'autre part à au moins un terminal de charge (5, 6) pour le branchement sur un réseau électrique.

8. Pack d'alimentation selon l'une des revendications 6 et 7, **caractérisé en ce qu'**il comporte un module de synchronisation externe raccordé au bus de synchronisation (18) et commandant, à partir de la commutation des ponts (13), la synchronisation des tensions et/ou du courant qui sont fournis ou absorbés par chaque module (2A, 2B, 2C).

9. Pack d'alimentation selon l'une des revendications 6 et 7, **caractérisé en ce que** l'un des modules (2A, 2B, 2C) est déclaré comme module maitre commandant, à partir de la commutation des ponts (13), la synchronisation des tensions et/ou du courant qui sont fournis ou absorbés par chaque module (2A, 2B, 2C).

10. Pack d'alimentation selon l'une des revendications 8 ou 9, **caractérisé en ce que** les modules (2A, 2B, 2C) sont synchronisés de sorte que le pack d'alimentation délivre une tension sinusoïdale de commande de moteur.

11. Pack d'alimentation selon la revendication 10, **caractérisé en ce que** les modules (2A, 2B, 2C) sont synchronisés pour que seulement certains des modules délivrent une tension sinusoïdale de commande de moteur.

12. Pack d'alimentation selon la revendication 10, **caractérisé en ce que** les modules (2A, 2B, 2C) sont synchronisés pour que des modules délivrent une tension sinusoïdale de commande de moteur et pour que l'accumulateur électrique (3) de l'un seulement des modules soit déchargé au maximum.

13. Pack d'alimentation selon la revendication 12, **caractérisé en ce qu'**il comporte en outre un système de gestion de batteries dont les indicateurs d'état de charge et d'état d'énergie sont recalés lorsque l'accumulateur électrique (3) de l'un seulement des modules (2A, 2B, 2C) est déchargé au maximum.

14. Pack d'alimentation selon la revendication 10, **caractérisé en ce que** les modules (2A, 2B, 2C) sont synchronisés pour qu'un des modules procède à un équilibrage intercellulaire de son accumulateur électrique, en étant alimenté par au moins un autre module.

15. Pack d'alimentation selon l'une des revendications 8 ou 9, **caractérisé en ce que** les modules (2A, 2B, 2C) sont synchronisés de sorte qu'ils rechargent séquentiellement leur accumulateur électrique (3) respectif.

## Patentansprüche

1. Versorgungsmodul (2A, 2B, 2C) für einen Motor (1) eines Elektrofahrzeugs, umfassend:
- einen elektrischen Akkumulator (3);
- eine Brücke (13) aus reversiblen Schaltern, die mit dem elektrischen Akkumulator (3) direkt verbunden ist;
- eine Steuervorrichtung (15, 16) für die Schalter der Schalterbrücke (13), die zwei Betriebsmodi aufweist: einen Lademodus, in dem sie dazu angepasst ist, den elektrischen Akkumulator (3) von einem Stromnetz aus zu laden; und einen Wechselrichtermodus, in dem sie einen Motor des Elektrofahrzeugs steuert;
- einen Satz Spulen (17), die mit der Schalterbrücke (13) verbunden sind;
- ein Gehäuse (23), das die Elemente des Versorgungsmoduls enthält, wobei dieses Gehäuse über einen Satz lösbarer externer Anschlüsse verfügt, die Folgendes umfassen: eine Versorgungsklemmleiste (8) des Motors (1), die über dieselbe Anzahl von Ausgangsanschlüssen (20, 21, 22) wie die Anzahl von Spulen (17) in dem Satz Spulen verfügt; und einen Synchronisationsausgang (11), der mit der Steuervorrichtung (15, 16) für die Schalter der Schalterbrücke (13) verbunden ist, wobei dieser Synchronisationsausgang dazu angepasst ist, die gelieferten Spannungen und/oder Ströme mit den Spannungen und/oder Strömen anderer Module zu synchronisieren, wenn das Versorgungsmodul mit anderen Modulen verbunden ist; wobei jede Spule (17) des Satzes Spulen zwischen dem Mittelpunkt eines Arms der Schalterbrücke (13) und dem entsprechenden Ausgangsanschluss (20, 21, 22) der Versorgungsklemmleiste (8) des Motors (1) verbunden ist.

2. Versorgungsmodul nach einem beliebigen der vorhergehenden Ansprüche, **dadurch gekennzeichnet, dass** der Satz Spulen (17) direkt mit der Schalterbrücke (13) verbunden ist.

3. Versorgungsmodul nach einem beliebigen der vorhergehenden Ansprüche, **dadurch gekennzeichnet, dass** es ferner zwischen dem Satz Spulen (17) und der Versorgungsklemmleiste (8) des Motors (1) eine kapazitive Filterstufe (9) umfasst.

4. Versorgungsmodul nach einem beliebigen der vorhergehenden Ansprüche, **dadurch gekennzeichnet, dass** es ferner zwischen dem Satz Spulen (17) und der Versorgungsklemmleiste (8) des Motors (1) mindestens ein Relais (10) umfasst, das für jeden Ausgangsanschluss (20, 21, 22) der Versorgungsklemmleiste (8) des Motors einen Relaiskontakt umfasst.

5. Versorgungsmodul nach einem beliebigen der vorhergehenden Ansprüche, **dadurch gekennzeichnet, dass** die Schalterbrücke (13) dahingehend reversibel ist, dass sie dazu angepasst ist, sowohl das Laden als auch das Entladen des elektrischen Akkumulators (3) zu steuern.

6. Versorgungspack für ein Elektrofahrzeug, **dadurch gekennzeichnet, dass** es Folgendes umfasst:
- eine Vielzahl von Modulen nach einem der Ansprüche 1 bis 5;
- einen Versorgungsbus (4), der Leiter umfasst, wobei jeder Ausgangsanschluss (20, 21, 22) der Klemmleiste (8) jedes Moduls (2A, 2B, 2C) an einen der Leiter angeschlossen ist;
- einen Synchronisationsbus (18), an den der Synchronisationsausgang (11) jedes Moduls (2A, 2B, 2C) angeschlossen ist, sodass die Steuervorrichtung (15, 16) für die Schalter der Brücke (13) jedes Moduls (2A, 2B, 2C) mit dem Synchronisationsbus (18) verbunden ist.

7. Versorgungspack nach Anspruch 6, **dadurch gekennzeichnet, dass** es einen Ladeschalter (7) umfasst, der einerseits mit dem Versorgungsbus (4) verbunden ist und andererseits mit mindestens einem Ladeterminal (5, 6) für den Anschluss an ein Stromnetz verbunden ist.

8. Versorgungspack nach einem der Ansprüche 6 und 7, **dadurch gekennzeichnet, dass** es ein externes Synchronisationsmodul umfasst, das mit dem Synchronisationsbus (18) verbunden ist und durch das Schalten der Brücken (13) die Synchronisation der Spannungen und/oder des Stroms steuert, die durch jedes Modul (2A, 2B, 2C) bereitgestellt oder aufgenommen werden.

9. Versorgungspack nach einem der Ansprüche 6 und 7, **dadurch gekennzeichnet, dass** eines der Module (2A, 2B, 2C) als Mastermodul deklariert wird, das durch das Schalten der Brücken (13) die Synchronisation der Spannungen und/oder des Stroms steuert, die durch jedes Modul (2A, 2B, 2C) bereitgestellt oder aufgenommen werden.

10. Versorgungspack nach einem der Ansprüche 8 oder 9, **dadurch gekennzeichnet, dass** die Module (2A, 2B, 2C) so synchronisiert werden, dass das Versorgungspack eine sinusförmige Spannung zur Steuerung des Motors liefert.

11. Versorgungspack nach Anspruch 10, **dadurch gekennzeichnet, dass** die Module (2A, 2B, 2C) so synchronisiert werden, dass nur einige der Module eine sinusförmige Spannung zur Steuerung des Motors liefern.

12. Versorgungspack nach Anspruch 10, **dadurch gekennzeichnet, dass** die Module (2A, 2B, 2C) so synchronisiert werden, dass Module eine sinusförmige Spannung zur Steuerung des Motors liefern und dass der elektrische Akkumulator (3) von nur einem der Module maximal entladen wird.

13. Versorgungspack nach Anspruch 12, **dadurch gekennzeichnet, dass** es ferner ein Batterieverwaltungssystem umfasst, dessen Anzeigen des Ladezustands und des Energiezustands rekalibriert werden, wenn der elektrische Akkumulator (3) von nur einem der Module (2A, 2B, 2C) maximal entladen ist.

14. Versorgungspack nach Anspruch 10, **dadurch gekennzeichnet, dass** die Module (2A, 2B, 2C) so synchronisiert werden, dass eines der Module einen Ausgleich zwischen den Zellen seines elektrischen Akkumulators vornimmt, während es von mindestens einem anderen Modul versorgt wird.

15. Versorgungspack nach einem der Ansprüche 8 oder 9, **dadurch gekennzeichnet, dass** die Module (2A, 2B, 2C) so synchronisiert werden, dass sie ihren jeweiligen elektrischen Akkumulator (3) sequenziell wieder aufladen.

## Claims

1. Power module (2A, 2B, 2C) for an electric-vehicle motor (1), said module comprising:
- an electric accumulator (3);
- a reversible switch bridge (13) directly connected to the electric accumulator (3);
- a device (15, 16) for controlling the switches of the switch bridge (13) having two operating modes: a charger mode in which it is configured to charge the electric accumulator (3) from an electric network; and an inverter mode in which it controls a motor of the electric vehicle;
- a set of coils (17) connected to the switch bridge (13);
- a housing (23) enclosing the components of the power module, this housing being equipped with a set of external disconnectable connections which comprise: a terminal block (8) for supplying the motor (1) equipped with the same number of output connections (20, 21, 22) as the number of coils (17) in the set of coils; and a synchronization output (11) connected to the device (15, 16) for controlling the switches of the switch bridge (13), this synchronization output being configured to synchronize the delivered voltages and/or currents with the voltages and/or currents of other modules, when the power module is connected to other modules; each coil (17) of the set of coils being connected between the midpoint of one arm of the switch bridge (13) and the corresponding output connection (20, 21, 22) of the terminal block (8) for supplying the motor (1).

2. Power module according to any of the preceding claims, **characterized in that** the set of coils (17) is directly connected to the switch bridge (13).

3. Power module according to either of the preceding claims, **characterized in that** it further comprises, between the set of coils (17) and the terminal block (8) for supplying the motor (1), a capacitive filtering stage (9).

4. Power module according to any of the preceding claims, **characterized in that** it further comprises, between the set of coils (17) and the terminal block (8) for supplying the motor (1), at least one relay (10) comprising one relay contact for each output connection (20, 21, 22) of the terminal block (8) for supplying the motor.

5. Power module according to any of the preceding claims, **characterized in that** the switch bridge (13) is reversible and configured to control both charging and discharging of the electric accumulator (3).

6. Electric-vehicle power pack, **characterized in that** it comprises:
- a plurality of modules according to any of Claims 1 to 5;
- a power bus (4) that comprises conductors, each output connection (20, 21, 22) of the terminal block (8) of each module (2A, 2B, 2C) being connected to one of said conductors;
- a synchronization bus (18) to which the synchronization output (11) of each module (2A, 2B, 2C) is connected, so that the device (15, 16) for controlling the switches of the bridge (13) of each module (2A, 2B, 2C) is connected to the synchronization bus (18).

7. Power pack according to Claim 6, **characterized in that** it comprises a charging switch (7) connected on the one hand to the power bus (4) and connected on the other hand to at least one charging terminal (5, 6) for connecting to an electric network.

8. Power pack according to either of Claims 6 and 7, **characterized in that** it comprises an external synchronization module connected to the synchronization bus (18) and controlling, via switching of the bridges (13), synchronization of the voltages and/or current delivered or absorbed by each module (2A, 2B, 2C).

9. Power pack according to either of Claims 6 and 7, **characterized in that** one of the modules (2A, 2B, 2C) is declared to be master module controlling, via switching of the bridges (13), synchronization of the voltages and/or current delivered or absorbed by each module (2A, 2B, 2C).

10. Power pack according to either of Claims 8 and 9, **characterized in that** the modules (2A, 2B, 2C) are synchronized so that the power pack delivers a sinusoidal motor-control voltage.

11. Power pack according to Claim 10, **characterized in that** the modules (2A, 2B, 2C) are synchronized so that only certain modules deliver a sinusoidal motor-control voltage.

12. Power pack according to Claim 10, **characterized in that** the modules (2A, 2B, 2C) are synchronized so that some modules deliver a sinusoidal motor-control voltage and so that the electric accumulator (3) of only one of the modules is fully discharged.

13. Power pack according to Claim 12, **characterized in that** it further comprises a battery management system of which the state-of-charge and state-of-energy indicators are reset when the electric accumulator (3) of only one of the modules (2A, 2B, 2C) is fully discharged.

14. Power pack according to Claim 10, **characterized in that** the modules (2A, 2B, 2C) are synchronized so that one of the modules carries out inter-cell balancing of its electric accumulator, while being supplied by at least one other module.

15. Power pack according to either of Claims 8 and 9, **characterized in that** the modules (2A, 2B, 2C) are synchronized so that they sequentially recharge their respective electric accumulator (3).
